# FASCICULE DE BREVET EUROPEEN

(11) **EP 2 042 721 B1**
(45) Date de publication et mention de la délivrance du brevet: **10.11.2010**
(21) Numéro de dépôt: 08165157.2
(22) Date de dépôt: 25.09.2008
(51) Int. Cl.: F02K 1/38, F02K 1/48, F02K 3/06

(54) **Capot pour tuyère de turbomachine à motifs pour la réduction de bruit de jet, tuyère et turbomachine associées**
Haube für die Düse eines Strahltriebwerks mit Mustern zur Strahllärmunterdrückung, und entsprechende Düse und Strahltriebwerk
Turbomachine nozzle cowl having jet noise suppression pattern, corresponding nozzle and turbomachine

(30) Priorité: 28.09.2007 FR 0757940
(43) Date de publication de la demande: 01.04.2009
(73) Titulaire: SNECMA, 75015 Paris (FR)
(72) Inventeur: Aeberli, Sébastien, Jean-Paul, 75012 Paris (FR); Loheac, Pierre, Philippe, Marie, 77170 Brie Comte Robert (FR); Thomas, Stéphane, Jacques, François, 77170 Coubert (FR); Vuillemin, Alexandre, Alfred, Gaston, 77300 Fontainebleau (FR); Zeggai, Kamel, 93140 Bondy (FR)
(74) Mandataire: Boura, Olivier

(56) Documents cités:
- EP-A- 0 913 567
- EP-A- 1 496 238
- EP-A- 1 617 068
- WO-A-00/53915
- GB-A- 2 355 766
- US-A- 4 576 002

## Description

### Arrière-plan de l'invention

La présente invention se rapporte au domaine général des tuyères équipant les turbomachines. Elle vise plus particulièrement une tuyère à flux séparés dont au moins l'un des capots est muni de motifs destinés à réduire le bruit de jet engendré en sortie de la tuyère.

Les tuyères à flux séparés de turbomachine se composent généralement d'un capot primaire, d'un capot secondaire disposé concentriquement autour du capot primaire de façon à définir un premier canal annulaire pour l'écoulement d'un flux externe (ou flux froid), et d'un corps central disposé concentriquement à l'intérieur du capot primaire de façon à définir un second canal annulaire pour l'écoulement d'un flux interne (ou flux chaud).

L'une des solutions connues pour réduire le bruit de jet en sortie d'une telle tuyère est de favoriser le mélange entre les flux chaud et froid issus de la turbomachine. Toute la difficulté du problème réside dans le contrôle des caractéristiques du mélange à obtenir entre les flux chaud et froid, sachant qu'un mélange trop brutal a comme conséquence une augmentation indésirable des niveaux de turbulence dans le champ proche de l'éjection. Une telle augmentation influence de façon négative les réductions potentielles de bruit obtenues dans les zones de mélange plus éloignées. Ainsi, le mélange entre les flux doit donc être le plus efficace possible, tout en répondant à des contraintes et des critères d'efficacité aérodynamiques et acoustiques.

A cet effet, il est bien connu de munir l'un des capots de la tuyère d'une pluralité de motifs répétitifs répartis sur toute la circonférence du bord de fuite du capot. Par la mise en place de tels motifs sur le bord de fuite du capot de la tuyère, le mélange entre les flux s'effectue par la création de tourbillons (ou vortex) longitudinaux contrarotatifs.

Par exemple, la demande de brevet EP 0,913,567 prévoit de munir le bord de fuite du capot primaire de la tuyère d'une pluralité de motifs répétitifs de forme triangulaire (appelés chevrons) qui permettent de favoriser le mélange entre les flux chaud et froid. De même, la publication GB 2,355,766 propose de munir le bord de fuite des capots primaire et secondaire de la tuyère d'une pluralité de motifs répétitifs de forme trapézoïdale (appelés créneaux).

Bien que favorisant le mélange entre les flux, les motifs évoqués ci-dessus présentent cependant des inconvénients. En effet, une forme symétrique des motifs (tels que des triangles ou des créneaux) au bord de fuite d'au moins l'un des capots de la tuyère génère, au niveau de chaque motif, deux tourbillons (ou vortex) longitudinaux contrarotatifs d'intensité équivalente et relativement rapprochés l'un de l'autre. Sur toute la circonférence du capot de la tuyère, cela équivaut à une pluralité de paires de tourbillons qui se compensent entre elles. Il en résulte un mélange entre les flux peu efficace, notamment dans les zones les plus éloignées de l'éjection.

On connaît également de la publication EP 1,617,068 des motifs ayant chacun une forme de quadrilatère avec une première portion inclinée radialement vers l'intérieur du capot et une seconde portion inclinée radialement vers l'extérieur du capot. Au niveau de chacun de ces motifs, l'intensité des deux tourbillons générés est différente de sorte que ces tourbillons ne se compensent plus sur toute la circonférence du capot. Il en résulte une mise en rotation globale de l'écoulement dans les zones les plus éloignées de l'éjection avec comme conséquence un mélange entre les flux plus efficace et une meilleure réduction du bruit de jet, notamment aux basses fréquences. Toutefois, en plus du gain acoustique obtenu par de tels motifs dans les basses fréquences, ils génèrent également une augmentation des niveaux de bruit dans les hautes fréquences.

### Objet et résumé de l'invention

La présente invention vise à remédier aux inconvénients précités en proposant un capot pour tuyère à flux séparés permettant de rendre plus efficace le mélange entre les flux froid et chaud de façon à réduire le bruit de jet en sortie de tuyère aussi bien aux hautes qu'aux basses fréquences.

A cet effet, il est prévu un capot annulaire pour tuyère de turbomachine comportant une pluralité de motifs répétitifs disposés dans le prolongement d'un bord de fuite dudit capot et espacés circonférentiellement les uns des autres, chaque motif ayant sensiblement une forme de quadrilatère avec une base formée par une partie du bord de fuite du capot et deux sommets espacés vers l'aval de la base et raccordés à celle-ci par deux côtés, chaque motif étant dissymétrique par rapport à un plan médian du motif passant par un axe longitudinal dudit capot et comportant une première portion inclinée radialement vers l'intérieur du capot et une seconde portion inclinée radialement vers l'extérieur du capot, caractérisé en ce que les côtés de chaque motif ont sensiblement une forme de parabole.

Par rapport aux motifs divulgués dans la publication EP 1,617,068, les motifs selon l'invention présentent notamment un raccordement au bord de fuite du capot par des profils en forme de parabole. En effet, dans la publication EP 1,617,068, les côtés des motifs sont des segments de droite et le raccord entre deux motifs adjacents est circulaire. La demanderesse a constaté que la forme parabolique des côtés des motifs permet d'obtenir un mélange moins « agressif » et donc une pénalité acoustique dans les hautes fréquences moins importante, voire nulle. En outre, la dissymétrie des motifs permet de déstructurer le jet dans le champ proche de l'éjection, et donc de contribuer plus efficacement à la réduction du bruit de jet.

Selon une disposition particulière, la première portion de chaque motif s'étend longitudinalement sur une distance supérieure à la distance sur laquelle s'étend longitudinalement la seconde portion du motif.

La distance d'inclinaison de la première portion de chaque motif est de préférence supérieure à la distance d'inclinaison de la seconde portion de sorte que la pénétration dans le flux interne est plus importante que la pénétration dans le flux externe.

La distance d'inclinaison de la première portion de chaque motif peut être comprise entre 0% et 30% de la distance sur laquelle s'étend longitudinalement ladite portion, et la distance d'inclinaison de la seconde portion peut être comprise entre 0% et 20% de la distance sur laquelle s'étend longitudinalement ladite portion.

De préférence, la première portion de chaque motif s'étend longitudinalement sur une distance comprise entre 0,4 et 0,6 fois la distance circonférentielle séparant deux motifs adjacents et en ce que la seconde portion s'étend longitudinalement sur une distance comprise entre 0,2 et 0,4 fois ladite distance circonférentielle séparant deux motifs adjacents.

Les motifs peuvent être disposés sur le bord de fuite de l'un des capots de la tuyère, en respectant une symétrie par rapport à un plan vertical passant par un axe perpendiculaire à l'axe longitudinal de la tuyère.

La présente invention a également pour objet une tuyère de turbomachine dont le capot primaire et/ou le capot secondaire est un capot tel que défini précédemment.

La présente invention a encore pour objet une turbomachine comportant une tuyère telle que définie précédemment.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue en perspective d'une tuyère de turbomachine équipée d'un capot selon un mode de réalisation de l'invention ;
- la figure 2 est une vue élargie d'un motif de réduction du bruit de jet équipant la tuyère de la figure 1 ;
- la figure 3 est une vue de face du motif de réduction de bruit de la figure 2 ;
- la figure 4 est une vue en perspective d'une tuyère de turbomachine équipée d'un capot selon un autre mode de réalisation de l'invention ;
- la figure 5 est une vue de face d'une tuyère de turbomachine selon encore un autre mode de réalisation de l'invention ; et
- la figure 6 représente des courbes d'atténuation du bruit de jet de capots de tuyère munis de motifs.

### Description détaillée de modes de réalisation

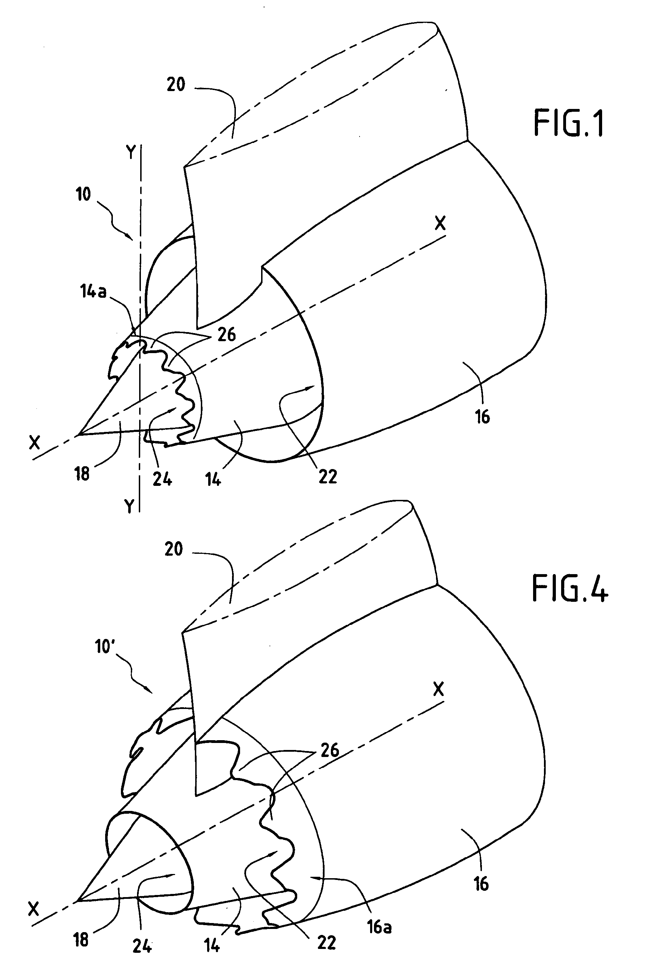

La figure 1 représente, en perspective, une tuyère 10 à flux séparés de turbomachine. La tuyère 10, de forme axisymétrique par rapport à son axe longitudinal X-X, est typiquement formée d'un capot primaire 14, d'un capot secondaire 16 et d'un corps central 18 centrés sur l'axe longitudinal X-X de la tuyère.

Le capot primaire 14, de forme sensiblement cylindrique ou tronconique, s'étend selon l'axe longitudinal X-X de la tuyère. Le corps central 18 est disposé concentriquement à l'intérieur du capot primaire 14 et se termine par une partie sensiblement conique.

Le capot secondaire 16, également de forme sensiblement cylindrique ou tronconique, entoure concentriquement le capot primaire 14 et s'étend selon l'axe longitudinal X-X de la tuyère.

On notera que l'axe longitudinal X-X de la tuyère est confondu avec l'axe longitudinal des capots primaire 14 et secondaire 16.

La tuyère à flux séparés ainsi définie est fixée sous une aile d'avion (non représentée sur les figures) par l'intermédiaire d'un pylône de support 20 s'appuyant sur le capot secondaire 16 de la tuyère et se prolongeant à l'intérieur du capot secondaire jusqu'au capot primaire 14.

L'assemblage concentrique des éléments de la tuyère 10 permet de définir : d'une part, entre les capots primaire 14 et secondaire 16, un premier canal annulaire 22 pour l'écoulement de l'air issu de la turbomachine (appelé aussi flux secondaire ou flux froid), et d'autre part, entre le capot primaire 14 et le corps central 18, un second canal annulaire 24 pour l'écoulement d'un flux gazeux interne issu de la turbomachine (appelé aussi flux primaire ou flux chaud).

Les flux gazeux interne et externe s'écoulant dans ces deux canaux annulaires 22, 24 se mélangent entre eux au niveau du bord de fuite 14a du capot primaire 14.

On notera que, sur la figure 1, le corps central 18 de la tuyère 10 est de type externe, c'est à dire que le corps central 18 s'étend longitudinalement au-delà du bord de fuite 14a du capot primaire 14.

Toutefois, l'invention peut également s'appliquer à une tuyère de type interne dans laquelle le bord de fuite du capot primaire s'étend longitudinalement au-delà du corps central de façon à recouvrir complètement ce dernier.

Au moins l'un des capots 14, 16 de la tuyère 10 (sur la figure 1, il s'agit du capot primaire 14) comporte une pluralité de motifs 26 répétitifs qui sont destinés à réduire le bruit de jet en sortie de la tuyère. Ces motifs 26 sont disposés dans le prolongement du bord de fuite 14a du capot primaire et sont régulièrement espacés les uns des autres selon une direction circonférentielle.

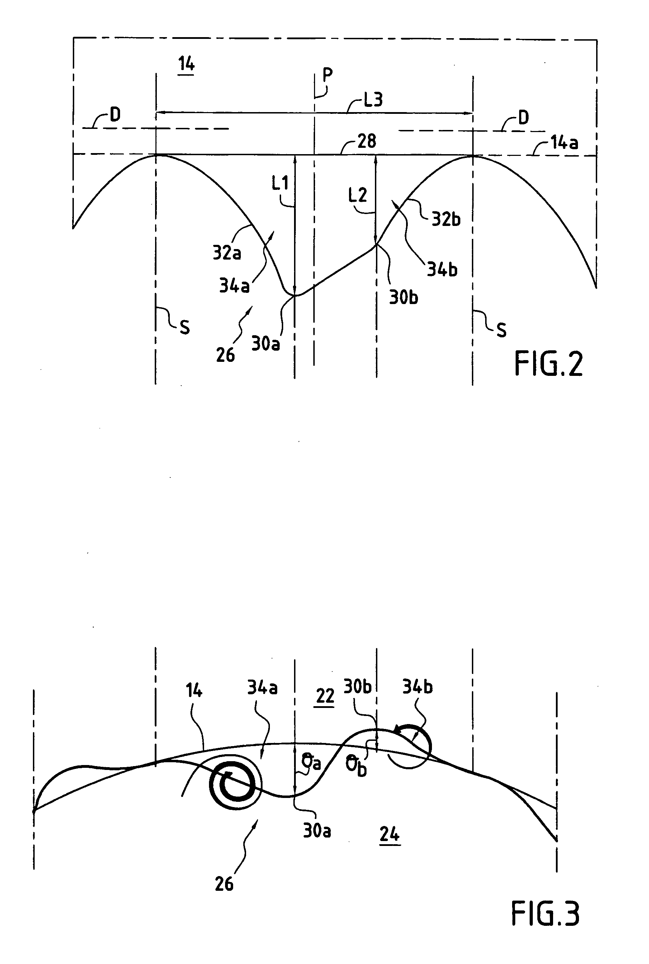

Comme représenté sur la figure 2, chaque motif 26 se présente sous la forme d'un quadrilatère avec une base 28 formée par une partie du bord de fuite 14a du capot primaire et deux sommets 30a, 30b espacés vers l'aval de la base et raccordés à celle-ci par deux côtés 32a, 32b.

Par ailleurs, chaque motif 26 est dissymétrique par rapport à un plan radial P qui est médian au motif et qui passe par l'axe longitudinal X-X. En outre, chaque motif 26 comporte une première portion 34a qui est inclinée radialement vers l'intérieur du capot primaire 14 et une seconde portion 34b qui est inclinée radialement vers l'extérieur du capot primaire 14.

Ces caractéristiques particulières des motifs 26 à réduction du bruit de jet sont représentées sur les figures 2 et 3.

Notamment, le plan P représenté sur la figure 2 correspond au plan médian du motif 26 de réduction de bruit de jet, ce plan P passant par l'axe longitudinal X-X (non représenté sur cette figure). Par rapport à ce plan P, la forme du motif 26 est dissymétrique.

Le plan médian P divise le motif 26 en ses deux portions : la première portion 34a qui est inclinée radialement vers l'intérieur du capot primaire 14 (c'est-à-dire dans le flux interne), et la seconde portion 34b qui est inclinée radialement vers l'extérieur du capot 14 (c'est-à-dire dans le flux externe).

Selon l'invention, les côtés 32a, 32b de chaque motif 26 ont chacun sensiblement une forme de parabole dont la directrice D s'étend selon une direction tangentielle et l'axe de symétrie S s'étend selon une direction longitudinale (voir la figure 2).

En d'autres termes, les motifs 26 sont raccordés au bord de fuite 14a du capot primaire 14 selon des profils sensiblement paraboliques.

Dans un repère orthonormé défini par la directrice D et l'axe de symétrie S, les côtés 32a, 32b de chaque motif 26 sont donc définis par une équation du type y = k.x² (y est défini selon l'axe S ; x selon l'axe D et k étant une constante), la constante k étant avantageusement comprise entre 0 et 1 (et de préférence égale à 0,4).

Selon une caractéristique avantageuse de l'invention, la première portion 34a de chaque motif 26 s'étend longitudinalement sur une distance L1 supérieure à la distance L2 sur laquelle s'étend longitudinalement la seconde portion 34b du motif (les distances L1 et L2 correspondent aux distances respectives entre les sommets 30a, 30b et la base 28 des motifs). Avec une telle configuration, la pénétration du motif 26 dans le flux interne est plus importante que sa pénétration dans le flux externe.

Par ailleurs, la première portion 34a de chaque motif 26 s'étend longitudinalement sur une distance L1 qui est de préférence comprise entre 0,4 et 0,6 fois la distance circonférentielle L3 séparant deux motifs adjacents (la distance L3 correspond à la longueur de la base 28 du quadrilatère formant le motif 26).

De même, la seconde portion 34b de chaque motif 26 s'étend longitudinalement sur une distance L2 qui est de préférence comprise entre 0,2 et 0,4 fois la distance L3 circonférentielle séparant deux motifs adjacents.

Les inclinaisons radiales respectives des première et seconde portions 34a, 34b des motifs 26 à réduction du bruit de jet sont illustrées sur la figure 3.

Sur cette figure, l'extrémité de la première portion 34a du motif est inclinée radialement vers l'intérieur du capot 14, c'est-à-dire vers le canal 24 d'écoulement du flux interne, d'une distance d'inclinaison θa (en d'autres termes, le sommet 30a du motif s'écarte du bord de fuite 14a du capot 14 d'une distance θa).

Quant à l'extrémité de la seconde portion 34b du motif, elle est inclinée radialement vers l'extérieur du capot 14, c'est-à-dire vers le canal 22 d'écoulement du flux externe, d'une distance d'inclinaison θb (en d'autres termes, le sommet 30b du motif s'écarte du bord de fuite 14a du capot 14 d'une distance θb).

Selon une autre caractéristique avantageuse de l'invention, la distance de pénétration interne θa de la première portion 34a de chaque motif 26 à réduction du bruit de jet est supérieure à la distance de pénétration externe θb de la seconde portion 34b du motif. Avec une telle configuration, la pénétration du motif 26 dans le flux interne est plus importante que sa pénétration dans le flux externe.

A titre indicatif, la distance de pénétration interne θa de la première portion 34a du motif peut représenter entre 0% et 30% de la distance longitudinale L1 sur laquelle s'étend cette portion du motif. De même, toujours à titre d'exemple, la distance de pénétration externe θb de la seconde portion 34b du motif peut correspondre entre 0% et 20% de la distance longitudinale L2 sur laquelle s'étend cette seconde portion.

Toujours sur la figure 3, on remarque bien que la géométrie particulière des motifs 26 à réduction du bruit de la tuyère selon l'invention génère, au niveau de chaque motif, deux vortex (ou tourbillons) longitudinaux, contrarotatifs et d'intensités différentes. Les intensités de ces deux vortex ne se compensent donc pas.

Sur l'ensemble du capot muni à son bord de fuite de ces motifs à réduction de bruit, il en résulte une mise en rotation globale de l'écoulement dans les zones plus éloignées de l'éjection qui est favorable à un mélange plus efficace entre les flux interne et externe.

La figure 4 représente une tuyère 10' de turbomachine selon un autre mode de réalisation de l'invention.

Par rapport au mode de réalisation, les motifs 26 à réduction du bruit de jet de cette tuyère 10' sont disposés, non pas sur le capot primaire 14, mais sur le bord de fuite 16a du capot secondaire 16.

Dans cette configuration, les motifs 26 permettent de favoriser le mélange entre, d'une part le flux gazeux froid s'écoulant dans le premier canal 22 délimité par les capots primaire 14 et secondaire 16 de la tuyère 10', et d'autre part le flux d'air s'écoulant le long de la paroi externe du capot secondaire 16.

La forme et la disposition particulière de ces motifs 26 à réduction du bruit de jet sont en tout point identiques à celles de la description faite en relation avec les figures 1 à 3.

Sur la figure 4, on remarquera que les motifs 26 à réduction du bruit de jet ne sont pas disposés sur toute la circonférence du bord de fuite du capot secondaire. En effet, un intervalle sans motif est ménagé au niveau de la zone de raccordement de la tuyère 10' avec le pylône de support 20 afin de permettre la fixation de ce dernier.

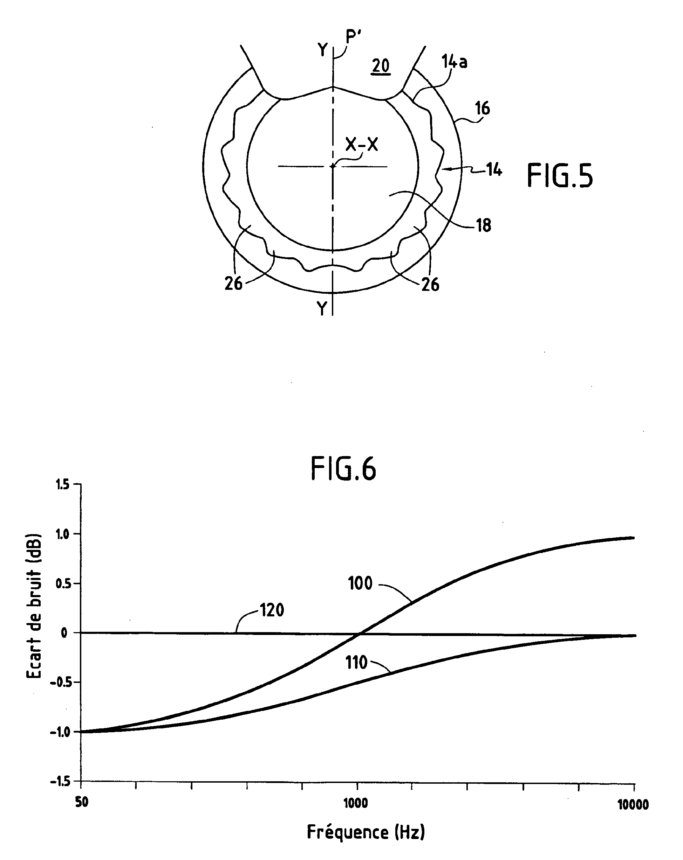

Selon encore un autre mode de réalisation de l'invention représenté sur la figure 5, les motifs 26 à réduction de bruit peuvent être disposés sur le bord de fuite de l'un des capots de la tuyère (il s'agit du capot primaire 14 sur la figure 5), en respectant une symétrie par rapport à un plan vertical P' passant par un axe Y-Y perpendiculaire à l'axe longitudinal X-X. Le plan de symétrie P' est délimité sur la partie supérieure du capot par le pylône de support 20 et sur la partie inférieure par une forme particulière du motif 26, cette forme pouvant par exemple être le résultat de l'assemblage de deux demi motifs.

Selon encore un autre mode de réalisation de l'invention (non représenté sur les figures), les motifs à réduction du bruit de jet peuvent être aménagés à la fois sur la capot primaire et sur le capot secondaire de la tuyère.

De manière générale, on notera que la forme et le nombre des motifs à réduction du bruit de jet aménagés sur la circonférence du bord de fuite du capot (qu'il soit primaire ou secondaire) peuvent varier. En particulier, la position angulaire de leur dissymétrie par rapport à leur plan médian P, les longueurs L1 et L2 caractéristiques de leurs deux portions, ainsi que le taux de pénétration dans les flux interne et externe peuvent être différents suivant les applications.

Des simulations numériques du niveau de bruit engendré par une tuyère à flux séparés dont le capot primaire est équipé de motifs à réduction de bruit selon l'invention ont été réalisées. Les résultats de ces simulations sont représentés dans le graphique comparatif de la figure 6.

Le graphique de cette figure illustre, sous forme de courbes, les écarts de bruit en décibels en fonction de la fréquence pour une tuyère dont le capot primaire est muni de motifs à réduction de bruit ayant une forme correspond à l'enseignement de la demande de brevet EP 1,617,068 (courbe 100) et pour une tuyère dont le capot primaire est muni de motifs à réduction de bruit selon l'invention (courbe 110). Les écarts de bruit sont calculés par rapport à une courbe 120 correspondant au bruit engendré par une tuyère à flux séparés dont le capot primaire est dépourvu de motifs à réduction de bruit.

La Demanderesse a ainsi constaté que l'utilisation de motifs à réduction de bruit selon l'invention permet non seulement de diminuer le bruit à basses fréquences (inférieur à 1000 Hz environ) par rapport à une tuyère dépourvue de motifs (courbe 120), mais également de diminuer le bruit à hautes fréquences (supérieure à 1000 Hz environ) par rapport à la tuyère dont le capot primaire est muni de motifs selon la publication EP 1,617,068 (à savoir des motifs à côtés droits et à raccordement au bord de fuite du capot selon un profil circulaire).

En d'autres termes, par rapport à la tuyère décrite dans la publication EP 1,617,068, la tuyère selon la présente invention permet de limiter fortement l'augmentation du bruit de jet aux hautes fréquences tout en conservant le gain acoustique obtenu pour les basses fréquences.

## Revendications

1. Capot annulaire (14, 16) pour tuyère de turbomachine comportant une pluralité de motifs (26) répétitifs disposés dans le prolongement d'un bord de fuite (14a, 16a) dudit capot et espacés circonférentiellement les uns des autres, chaque motif ayant sensiblement une forme de quadrilatère avec une base (28) formée par une partie du bord de fuite du capot et deux sommets (30a, 30b) espacés vers l'aval de la base et raccordés à celle-ci par deux côtés (32a, 32b), chaque motif étant dissymétrique par rapport à un plan médian (P) du motif passant par un axe longitudinal (X-X) dudit capot et comportant une première portion (34a) inclinée radialement vers l'intérieur du capot et une seconde portion (34b) inclinée radialement vers l'extérieur du capot, **caractérisé en ce que** les côtés (30a, 30b) de chaque motif ont sensiblement une forme de parabole.

2. Capot selon la revendication 1, dans lequel la première portion (34a) de chaque motif (26) s'étend longitudinalement sur une distance (L1) supérieure à la distance (L2) sur laquelle s'étend longitudinalement la seconde portion (34b) dudit motif.

3. Capot selon l'une des revendications 1 et 2, dans lequel la distance d'inclinaison (θa) de la première portion (34a) de chaque motif (26) est supérieure à la distance d'inclinaison (θb) de la seconde portion (34b) dudit motif.

4. Capot selon l'une quelconque des revendications 1 à 3, dans lequel la distance d'inclinaison (θa) de la première portion (34a) de chaque motif (26) est comprise entre 0% et 30% de la distance (L1) sur laquelle s'étend longitudinalement ladite portion, et la distance d'inclinaison (θb) de la seconde portion (34b) est comprise entre 0% et 20% de la distance (L2) sur laquelle s'étend longitudinalement ladite portion.

5. Capot selon l'une quelconque des revendications 1 à 4, dans lequel la première portion (34a) de chaque motif (26) s'étend longitudinalement sur une distance (L1) comprise entre 0,4 et 0,6 fois la distance circonférentielle (L3) séparant deux motifs (26) adjacents et en ce que la seconde portion (34b) s'étend longitudinalement sur une distance (L2) comprise entre 0,2 et 0,4 fois ladite distance circonférentielle (L3) séparant deux motifs adjacents.

6. Capot selon l'une quelconque des revendications 1 à 5, **caractérisé en ce que** les motifs (26) sont disposés de façon symétrique par rapport à un plan (P') passant par un axe (Y-Y) perpendiculaire à l'axe longitudinal (X-X) du capot.

7. Tuyère (10, 10') de turbomachine, comportant un capot primaire (14) disposé selon un axe longitudinal (X-X) de la tuyère et un capot secondaire (16) disposé concentriquement autour du capot primaire (14), **caractérisée en ce que** le capot primaire (14) est un capot selon l'une quelconque des revendications 1 à 6.

8. Tuyère (10, 10') de turbomachine, comportant un capot primaire (14) disposé selon un axe longitudinal (X-X) de la tuyère et un capot secondaire (16) disposé concentriquement autour du capot primaire (14), **caractérisée en ce que** le capot secondaire (16) est un capot selon l'une quelconque des revendications 1 à 6.

9. Tuyère (10, 10') de turbomachine, comportant un capot primaire (14) disposé selon un axe longitudinal (X-X) de la tuyère et un capot secondaire (16) disposé concentriquement autour du capot primaire (14), **caractérisée en ce que** les capots primaire (14) et secondaire (16) sont des capots selon l'une quelconque des revendications 1 à 6.

10. Turbomachine comportant une tuyère (10, 10') selon l'une quelconque des revendications 7 à 9.

## Claims

1. An annular cowl (14, 16) for a turbomachine nozzle, the cowl having a plurality of repetitive patterns (26) extending a trailing edge (14a, 16a) of said cowl and spaced circumferentially apart from one another, each pattern being substantially in the shape of a quadrilateral having a base (28) formed by a portion of the trailing edge of the cowl, and two vertices (30a, 30b) spaced downstream from the base and connected thereto via two sides (32a, 32b), each pattern being asymmetrical relative to a midplane (P) of the pattern containing a longitudinal axis (X-X) of said cowl and comprising a first portion (34a) that is inclined radially towards the inside of the cowl and a second portion (34b) that is inclined radially towards the outside of the cowl, the cowl being **characterized in that** the sides (30a, 30b) of each pattern are substantially parabolic in shape.

2. A cowl according to claim 1, in which the first portion (34a) of each pattern (26) extends longitudinally over a distance (L1) that is greater than the distance (L2) over which the second portion (34b) of said pattern extends longitudinally.

3. A cowl according to claim 1 or claim 2, in which the inclination distance (θa) of the first portion (34a) of each pattern (26) is greater than the inclination distance (θb) of the second portion (34b) of said pattern.

4. A cowl according to any one of claims 1 to 3, in which the inclination distance (θa) of the first portion (34a) of each pattern (26) lies in the range 0% to 30% of the distance (L1) over which said portion extends longitudinally, and the inclination distance (θb) of the second portion (34b) lies in the range 0% to 20% of the distance (L2) over which said portion extends longitudinally.

5. A cowl according to any one of claims 1 to 4, in which the first portion (34a) of each pattern (26) extends longitudinally over a distance (L1) lying in the range 0.4 to 0.6 times the circumferential distance (L3) between two adjacent patterns (26), and in that the second portion (34b) extends longitudinally over a distance (L2) lying in the range 0.2 to 0.4 times said circumferential distance (L3) between two adjacent patterns.

6. A cowl according to any one of claims 1 to 5, **characterized in that** the patterns (26) are disposed symmetrically relative to a plane (P') containing an axis (Y-Y) perpendicular to the longitudinal axis (X-X) of the cowl.

7. A turbomachine nozzle (10, 10') comprising a primary cowl (14) disposed around a longitudinal axis (X-X) of the nozzle and a secondary cowl (16) disposed concentrically around the primary cowl (14), the nozzle being **characterized in that** the primary cowl (14) is a cowl according to any one of claims 1 to 6.

8. A turbomachine nozzle (10, 10') comprising a primary cowl (14) disposed around a longitudinal axis (X-X) of the nozzle and a secondary cowl (16) disposed concentrically around at the primary cowl (14), the nozzle being **characterized in that** the secondary cowl (16) is a cowl according to any one of claims 1 to 6.

9. A turbomachine nozzle (10, 10') comprising a primary cowl (14) disposed around a longitudinal axis (X-X) of the nozzle and a secondary cowl (16) disposed concentrically around the primary cowl (14), the nozzle being **characterized in that** the primary and secondary cowls (14, 16) are cowls according to any one of claims 1 to 6.

10. A turbomachine including a nozzle (10, 10') according to any one of claims 7 to 9.

## Patentansprüche

1. Ringförmige Verkleidung (14, 16) für eine Düse einer Turbomaschine, mit einer Vielzahl von sich wiederholenden Mustern (26), die in der Verlängerung einer Austrittskante (14a, 16a) der Verkleidung angeordnet und in Umfangsrichtung voneinander beabstandet sind, wobei jedes Muster im wesentlichen die Form eines Vierecks aufweist, das eine Basis (28), die von einem Teil der Austrittskante der Verkleidung gebildet ist, sowie zwei Spitzen (30a, 30b), die stromabwärts von der Basis beabstandet und mit dieser über zwei Seiten (32a, 32b) verbunden sind, aufweist, wobei jedes Muster in bezug auf eine durch eine Längsachse (X-X) der Verkleidung verlaufende Mittelebene (P) des Musters asymmetrisch ist und einen radial zur Innenseite der Verkleidung geneigten ersten Abschnitt (34a) und einen radial zur Außenseite der Verkleidung geneigten zweiten Abschnitt (34b) umfaßt, **dadurch gekennzeichnet, daß** die Seiten (30a, 30b) eines jeden Musters im wesentlichen parabelförmig sind.

2. Verkleidung nach Anspruch 1, wobei der erste Abschnitt (34a) jedes Musters (26) sich in Längsrichtung über eine Strecke (L1) erstreckt, die größer als die Strecke (L2) ist, über die sich der zweite Abschnitt (34b) des Musters in Längsrichtung erstreckt.

3. Verkleidung nach einem der Ansprüche 1 und 2, wobei der Neigungsabstand (Θa) des ersten Abschnitts (34a) jedes Musters (26) größer ist als der Neigungsabstand (Θb) des zweiten Abschnitts (34b) des Musters.

4. Verkleidung nach einem der Ansprüche 1 bis 3, wobei der Neigungsabstand (Θa) des ersten Abschnitts (34a) jedes Musters (26) 0 % bis 30 % der Strecke (L1) beträgt, über die sich der Abschnitt in Längsrichtung erstreckt, und der Neigungsabstand (Θb) des zweiten Abschnitts (34b) 0 % bis 20 % der Strecke (L2) beträgt, über die sich der Abschnitt in Längsrichtung erstreckt.

5. Verkleidung nach einem der Ansprüche 1 bis 4, wobei der erste Abschnitt (34a) jedes Musters (26) sich in Längsrichtung über eine Strecke (L1) erstreckt, die das 0,4 bis 0,6-fache des zwei benachbarte Muster (26) trennenden Umfangsabstandes (L3) beträgt, und daß der zweite Abschnitt (34b) sich in Längsrichtung über eine Strecke (L2) erstreckt, die das 0,2 bis 0,4-fache des zwei benachbarte Muster trennenden Umfangsabstandes (L3) beträgt.

6. Verkleidung nach einem der Ansprüche 1 bis 5, **dadurch gekennzeichnet, daß** die Muster (26) in bezug zu einer Ebene (P'), die durch eine zur Längsachse (X-X) der Verkleidung senkrechte Achse (Y-Y) verläuft, symmetrisch angeordnet sind.

7. Düse (10, 10') einer Turbomaschine, die eine primäre Verkleidung (14), welche entlang einer Längsachse (X-X) der Düse angeordnet ist, sowie eine sekundäre Verkleidung (16), die um die primäre Verkleidung (14) herum konzentrisch angeordnet ist, umfaßt, **dadurch gekennzeichnet, daß** die primäre Verkleidung (14) eine Verkleidung nach einem der Ansprüche 1 bis 6 ist.

8. Düse (10, 10') einer Turbomaschine, die eine primäre Verkleidung (14), welche entlang einer Längsachse (X-X) der Düse angeordnet ist, sowie eine sekundäre Verkleidung (16), die um die primäre Verkleidung (14) herum konzentrisch angeordnet ist, umfaßt, **dadurch gekennzeichnet, daß** die sekundäre Verkleidung (16) eine Verkleidung nach einem der Ansprüche 1 bis 6 ist.

9. Düse (10, 10') einer Turbomaschine, die eine primäre Verkleidung (14), welche entlang einer Längsachse (X-X) der Düse angeordnet ist, sowie eine sekundäre Verkleidung (16), die um die primäre Verkleidung (14) herum konzentrisch angeordnet ist, umfaßt, **dadurch gekennzeichnet, daß** die primäre Verkleidung (14) und die sekundäre Verkleidung (16) Verkleidungen nach einem der Ansprüche 1 bis 6 sind.

10. Turbomaschine, die eine Düse (10, 10') nach einem der Ansprüche 7 bis 9 umfaßt.
